# EUROPEAN PATENT SPECIFICATION

(11) **EP 2 118 352 B1**
(45) Date of publication and mention of the grant of the patent: **07.11.2012**
(21) Application number: 08742063.4
(22) Date of filing: 12.03.2008
(51) Int. Cl.: D04H 3/14, B41M 5/00, B32B 5/26

(54) **NONWOVEN PRINTING MEDIUM**
VLIESDRUCKMEDIUM
MILIEU D'IMPRESSION NON TISSÉ

(30) Priority: 12.03.2007 US 906340 P
(43) Date of publication of application: 18.11.2009
(73) Proprietor: E. I. Du Pont de Nemours and Company, Wilmington, DE 19898 (US)
(72) Inventor: WALLER, Tina, Amick, Old Hickory, Tennessee 37138 (US); LITTLE, Brian, P., Chesterfield, Virginia 23832 (US); COLLISON, Jack, Ashland, Virginia 23005 (US)
(74) Representative: Dannenberger, Oliver Andre
(86) International application number: PCT/US2008/003322
(87) International publication number: WO 2008/112271

(56) References cited:
- WO-A-99/33669
- WO-A-2004/003278
- WO-A-2005/108657
- WO-A-2007/016480
- US-A1- 2004 248 492
- US-A1- 2005 130 545
- US-B2- 6 831 025
- US-B2- 7 008 888

## Description

### BACKGROUND OF THE INVENTION

### 1. Field of the Invention

This invention relates to nonwoven printing media suitable for printing by laser printing, thermal printing, ink-jet printing, or other conventional printing processes.

### 2. Description of the Related Art

Polymeric nonwoven sheet materials are known for use as printing media. For instance, U.S. Patent Application Publication No. 2004/0248492 A1 discloses a nonwoven printing medium made by laminating two or more nonwoven layers together to provide sufficiently uniform thickness and basis weight and sufficient structural properties to be suitable for use in various commercial printing operations such as, for example, ink-jet printing and laser printing, as well as the more traditional printing technologies of flexography, lithography, letterpress printing, gravure and offset.

US 2005/130545 A1 relates to a full-surface bonded Multiple component nonwoven fabric that has an improved combination of tear strength and tensile strength at lower thicknesses.

WO 2005/108657 A discloses a method for preparing webs of spunbond fibers having reduced diameter.

WO 99/33669 provides a media for ink jet printing, the printing media being a fibrous fabric or sheet substrate

There is a need for a printing medium suitable for use in commercial printing operations that would obviate the need for multiple nonwoven layers and associated costly lamination steps, yet would provide high-quality print processing, sufficiently uniform thickness and basis weight and sufficient structural properties to be suitable for use in various commercial printing operations.

### SUMMARY OF THE INVENTION

In one embodiment, the present invention is directed to a nonwoven printing medium having a single spunbond nonwoven web formed from substantially continuous polymeric sheath-core spunbond fibers and an optional printable coating, wherein the printing medium is as described in claim 1.

### DETAILED DESCRIPTION OF THE INVENTION

The terms "spunbond nonwoven," "spunbond layer," "spunbond nonwoven fabric" and "spunbond nonwoven web" are used interchangeably herein to refer to a nonwoven sheet formed from melt spun continuous filaments also referred to as "spunbond fibers" or "spunbond filaments." The term "spunbond" filaments as used herein means filaments which are formed by extruding molten thermoplastic polymer material as filaments from a plurality of fine capillaries of a spinneret with the diameter of the extruded filaments then being rapidly reduced by drawing. Spunbond filaments are generally continuous and usually have an average diameter of greater than about 5 microns. Spunbond nonwoven fabrics are formed by laying spunbond filaments randomly on a collecting surface such as a foraminous screen or belt. Spunbond webs can be bonded by methods known in the art such as thermal calendering, through air bonding, or by passing the web through a saturated-steam chamber at an elevated pressure.

The terms "nonwoven","nonwoven web" and "nonwoven layer" refer to a web including a multitude of randomly distributed fibers. The fibers generally can be bonded to each other or can be unbonded. The fibers can comprise a single component or multitude components.

The terms "multiple component filament" and "multiple component fiber" as used herein refer to any filament or fiber that is composed of at least two distinct polymers which have been spun together to form a single filament or fiber. The multiple component fibers or filaments are bicomponent fibers or filaments which are made from two distinct polymers arranged in distinct zones across the cross-section of the multiple component fibers and extending along the length of the fibers. Multiple component fibers are distinguished from fibers which are extruded from a homogeneous melt blend of polymeric materials. Multiple component fibers useful in the invention are preferably sheath-core fibers. The multiple component continuous filament spunbond webs useful in the current invention can be prepared using spunbonding methods known in the art. Spunbond filaments are generally round but can be made in a variety of other shapes (e.g. oval, tri-lobal or multi-lobal, flat, hollow, etc.) and configurations (e.g. symmetrical sheath-core, eccentric sheath-core, etc.).

"Calendering" is the process of passing a web through a nip between two rolls. The rolls may be in contact with each other, or there may be a fixed or variable gap between the roll surfaces. The rolls of the nip may be "soft," i.e., having a surface which deforms under applied pressure, or "hard," i.e., having a surface in which no deformation occurs under applied pressure during the calendering process. The rolls of the nip may be unpatterned, i.e., having no points or patterns to deliberately produce a pattern on the web as it passed through the nip. "Point bonding" is the process of passing a web through a nip between two rolls having a pattern to bond the web at discrete points. Alternatively, the rolls may be unpatterned, i.e., having a smooth surface. "Area bonding" is the process of passing the web through a nip between two smooth rolls.

The terms "printing medium" and "printing substrate" are used interchangeably to refer to a flexible sheet material that can be processed by conventional printers for forming printing images thereon.
The printing medium of the invention is a multiple component spunbond nonwoven sheet formed of multiple component continuous thermoplastic polymer filaments. The spunbond nonwoven layer can be formed primarily or exclusively from multiple component spunbond fibers produced by melt spinning, such as illustrated in U.S. Patent Nos. 6,831,025 and 7,008,888. Such bicomponent spunbond fibers have been found to be particularly well suited for use in the printing medium of the invention since the bicomponent fibers can combine a core component that provides high tensile and tear strength with a sheath component that provides the bondability that creates a smooth, abrasion resistant surface.

Suitable polymers for use as a core component include polyesters such as poly(ethylene terephthalate). Suitable polymers for use as the sheath component include polymers exhibiting a melting or softening temperature at least about 10°C lower than that of the core component, including copolyesters. During the bonding process, the lower-melting sheath component will soften and flow to bond the spunbond layer, and thereafter may not necessarily be readily identifiable as continuous binder filaments. The weight ratio of the sheath component to the core component is between about 10.90 and 90:10. The polymers of the spunbond nonwoven layer result in a printing medium having high temperature resistance thus suitable for high temperature printing applications. The polymer of the sheath and/or core can include conventional additives such as dyes, pigments, antioxidants, stabilizers, whiteners, delusterants, optical brighteners and the like.

The basis weight of the spunbond web can be between about 75 g/m² and about 152 g/m². The thickness of the spunbond web can be between about 0.127 and about 0.254 mm (between about 5 and about 10 mils).

The spunbond nonwoven layer can be thermally calendered by area bonding or point bonding in order to impart a smooth or textured printing surface, respectively as desired, to the printing medium of the invention. The spunbond nonwoven layer can be fed into a calender nip between two rolls in which at least one roll is maintained at a temperature that is between the temperature at which the polymer undergoes a transition from glassy to rubbery state and the temperature of the onset of melting of the polymer, such that the fibers of the spunbond nonwoven layer are in a plasticized state when passing through the calender nip. The composition and hardness of the rolls can be varied to yield the desired end use properties of the fabric. The residence time of the spunbond nonwoven layer in the nip between the two rolls is controlled by the line speed of the web. The bonding conditions such as line speed, temperature and pressure may be varied as would be apparent to one skilled in the art.

The printing medium is characterized by having a tensile strength in both the machine direction (MD) and the cross direction (CD) of at least 155.8 N (35 pounds). Furthermore, the printing medium has superior surface stability in use, owing to excellent abrasion resistance, and a superior combination of outdoor durability and tear resistance. The medium can have excellent resistance to tear propagation in both the MD and CD directions equally.

Another important property affecting the suitability of the substrate is its ink transport properties. It is desirable that the ink or toner will penetrate somewhat into the medium, but not so much that the ink or toner will migrate into the interior of the web to result in dull colors.

In a suitable process for producing the printing medium, the spunbond nonwoven web is conveyed through a first calender nip wherein the lower-melting sheath component is heated to the point that it begins to soften and fuse to adhere the filaments together. The cooperating calender rolls preferably provide a fixed gap nip that ensures that the nonwoven web will not exit the nip thinner than the targeted gap thickness. Bonding conditions, including the temperature and pressure of the nip, are known in the art for differing polymers. For nonwoven spunbond webs formed from sheath/core filaments having a sheath of copolyester and a core of polyethylene terephthalate, the nip is preferably heated to a temperature between about 115°C and 200°C, preferably from about 150 to 170°C. The nip is typically run at pressures ranging from about 350 N/cm to about 1750 N/cm (about 200 to about 1000 pounds per linear inch (PLI).

The printing medium can be used in the uncoated, calendered state, or it can be provided with a printable coating on one or both surfaces. The coating can be applied before or after calendering or both. Suitable coatings include the kinds of coating compositions conventionally used in producing coated paper. Such coating compositions typically have an aqueous or other solvent-based binder and can include pigments and fillers such as silica, calcium carbonate, kaolin, cacined kaolin, clay, titanium oxide, aluminum silicate, magnesium silicate, magnesium carbonate, magnesium oxide, zinc oxides, tin oxides, zinc hydroxide, aluminum oxide, aluminum hydroxide, talc, barium sulfate and calcium silicate, boehmite, pseudo-boehmite, diatomaceous earth, styrene plastic pigments, urea resin plastic pigments and benzoguanamine plastic pigments. Exemplary binders include polyvinyl alcohol, styrene-butadiene polymers, acrylic polymers, styrene-acrylic polymers, and vinyl acetate and ethylene-vinyl acetate polymers. Commercially available examples of such binders include acrylic polymers such as RHOPLEX B-15 and RHOPLEX P-376, and vinyl acetate/acrylic polymers such as Polyco 2152 and Polyco 3250, all made by Rohm and Haas Company, and styrene/butadiene polymers such as CP 620 made by Dow Chemical Company. The coating composition can additionally include additives, such as flame retardants, optical brighteners, water resistance agents, antimicrobials, UV stabilizers and absorbers, and the like. The coating composition can be tailored for the particular printing technology intended to be used in the printing operation. Thus, for example, a printing medium intended for inkjet printing can be provided with a coating receptive to the solvent or aqueous based dyes or pigments used in the inkjet process, while a medium for laser printing would have a coating receptive to the toner used in laser printing. Suitable coating compositions of this type are commercially available from a variety of vendors and a coating formulation appropriate for a specific end-use printing application can be readily obtained.

A coated printing medium according to the invention has a basis weight, including the weight of the spunbond nonwoven web and the coating, of between 80 g/m² and 240 g/m². The coated printing medium has a smoothness of between 4.5 micrometers and 10 micrometers.

### EXAMPLES

In the description above and in the examples that follow, the following test methods were employed to determine various reported characteristics and properties. ASTM refers to the American Society for Testing and Materials. TAPPI refers to the Technical Association of the Pulp and Paper Industry.

Basis weight is a measure of the mass per unit area of a fabric or sheet and was determined by ASTM D-3776, which is hereby incorporated by reference, and is reported in g/m².

Tensile strength in the machine direction and cross direction was determined according to ASTM D5035. The results were measured in lb

Tear strength in the machine and cross direction was determined according to ASTM D5734. The results were measured in lb.

Thickness was determined according to TAPPI T411. Smoothness was determined according to TAPPI T555.

Opacity was determined according to TAPPI T425.

### Example 1

The printing media of each of these examples was formed from sheath-core spunbond fibers prepared in a bicomponent spunbond process using a copolyester (coPET) having a melting point of about 218°C as the sheath component and polyethylene terephthalate (PET) with a melting point of about 260°C and an intrinsic viscosity of 0.64 as the core component. The PET and coPET resin were crystallized and dried before use. The PET and coPET polymers were heated and extruded in separate extruders, filtered and metered to a bicomponent spin block designed to provide a sheath-core filament cross section. The polymers were metered to provide fibers of the desired sheath/core ratio, based on the weight of each component. The ratio of the polyester component to the copolyester component in the spunbond fibers was 70:30. The filaments were cooled in a quenching zone with quenching air provided from two opposing quench boxes. The filaments then passed into a pneumatic draw jet where the filaments were drawn and then deposited onto a laydown belt assisted by vacuum suction. The spunbond layer was then thermally point bonded.

The bonding rolls used were heated by hot oil controlled to 140°C (285"F) for both rolls. The bonding pressure was set a 350 N/cm (200 pounds per linear inch (PLI)). The spunbond web was then area bonded. The bonding rolls used were heated by hot oil concolled to 157°C (315°F) for both rolls. The bonding pressure was set at about 1400 N/cm (800 PLI) The two hot metal rolls were nipped with a third unheated cotton roll. The spunbond web was wrapped around the two metal rolls in an S formation, with the first nip being the metal and cotton roll and the second nip being the two metal rolls.

A laser printable coating including a binder, pigment and filler was then applied to both sides of the spunbond layer. The coating was applied using an air knife coating method with a coating weight of 13.6 g/m². The coated spunbond layer was wound onto a roll, and subsequently run through the machine in a second pass to coat the opposite side of the layer.

### Example 2

An uncoated printing medium was made by forming a spunbond layer as in Example 1.

The bonding rolls used were heated by hot oil controlled to 135°C (275°F) for both rolls. The bonding pressure was set at 298 N/cm (170 pounds per linear inch (PLI)). The spunbond web was then area bounded. The bonding rolls used were heated by hot oil controlled to 160°C (320°F) for the first roll, and 179°C (355°F) for the second heated roll. The bonding pressure was set at about 1400 N/cm (800 PLI). The two hot metal rolls were nipped with a third unheated cotton roll. The spunbond web was wrapped around the second metal roll and the cotton roll in an S formation, with the first nip being the two metal rolls and the second nip being the metal and cotton rolls.

A printable coating including a binder, pigment and filler was then applied to both sides of the spunbond layer. The coating was applied using a Meyer rod coating method in two separate steps during a single pass through the machine with a total coating weight of 48 g/m².The coated spunbond layer was wound onto a roll, and subsequently run through the machine in a second pass to coat the opposite side of the fabric with a total coating weight of 74 g/m².

### Example 3

An uncoated printing medium was made by forming a spunbond layer as in Example 1.

The bonding rolls used were heated by hot oil controlled to 166°C (330°F) for both rolls. The bonding pressure was set at 876 N/cm (500 pounds per linear inch (PLI)).

### Example 4

A spunbond layer was formed from sheath-core spunbond fibers as in Examples 1-2.

The bonding rolls used were heated by hot oil controlled to 149°C (300°F) for both rolls. The bonding pressure was set at 350 N/cm (200 PLI).

The spunbond web was then area bonded along with a layer of paper and a second spunbond web to form a sandwich structure with the paper layer between the two layers of spunbond web. The bonding rolls used were heated by hot oil controlled to 127°C (260°F) for both metal rolls. The bonding pressure was set at about 1400 N/cm (800 PLI) The two hot metal rolls were nipped not with each other, but with third and fourth unheated composite rolls. The spunbond web was wrapped around the two metal rolls in an S formation, with the first nip being a metal and composite roll and the second nip being a metal and composite roll.

### Example 5

A spunbond layer was formed from sheath-core spunbond fibers as in Examples 1-2, with the exception that crystallized and dried PET containing titanium dioxide was metered in before the extruders at a rate to achieve 1% by weight titanium dioxide solids in the core.

The bonding rolls used were heated by hot oil controlled to 140°C (285°F) for both rolls. The bonding pressure was set at 350 N/cm (200 PLI).

The spunbond web was then area bonded along with a layer of Melinex® biaxially oriented polyester film (available from DuPont Teijin Films, Hopewell, Virginia) and a second spunbond web to form a sandwich structure with the film layer in between the two layers of spunbond web. The bonding rolls used were heated by hot oil controlled to 80°C (356°F) for both metal rolls. The bonding pressure was set at about 1400 N/cm (800 PLI). The two hot metal rolls were nipped with a third and fourth unheated composite roll. The spunbond web was wrapped around the two metal rolls in an S formation, with the first nip being a metal and composite roll and the second nip being a metal and composite roll.

### Examples 6

A spunbond layer was formed from sheath-core spunbond fibers as in Examples 1-2.

The bonding rolls used were heated by hot oil controlled to 149°C (300°F) for both rolls. The bonding pressure was set at 350 N/cm (200 PLI).

The spunbond web was then area bonded along with a layer of meltblown web containing 80% by weight PET (containing 3% by weight titanium dioxide) and 20% by weight copolyester side-by-side bicomponent fibers and a second spunbond web to form a sandwich structure with the meltblown layer between the two layers of spunbond web. The bonding roll used was heated by hot oil controlled to 181°C (358°F). The bonding pressure was set at about 1050 N/cm (600 PLI). The hot metal roll was nipped with an unheated composite roll. The spunbond web traveled straight between the metal and composite rolls. The sandwich structure was wound onto a roll, and subsequently run through the calender in a second pass to bond the opposite side of the structure.

The printing media of the Examples were tested for opacity, thickness, surface smoothness, tensile strength and tear strength, and the results are given in Table 1.

**Table 1**

| Example | Final Basis Weight | Opacity | Thickness | Smoothness (Side A/Side B) | Tensile Strength (MD/CD) | Tear Strength (MD/CD) |
|---|---|---|---|---|---|---|
| 1 | 144 g/m² | 83% | 0.157 mm (6.2 mils) | 7.5/9.4 | Not tested | 2.67/3.56 N (0.6/0.8 Ib) |
| 2 | 192 g/m² | 94% | 0.155 mm (6.1 mils) | Not tested | 285/124 N (64/48 Ib) | 2.67/3.56 N (0.6/0.8 Ib) |
| 3 | 121 g/m² | 66% | 0.193 mm (7.6 mils) | Not tested | 209/191 N (47/43 Ib) | 3.56/4.45 N (0.8/1.0 Ib) |
| 4 | 168 g/m² | 87% | 0.229 mm (9 mils) | Not tested | Not tested | 3.56/4.45 N (0.8/1.0 Ib) |
| 5 | 117 g/m² | 87% | 0.163 mm (6.4 mils) | Not tested | Not tested | 0.89/1.33 N (0.2/0.3 Ib) |
| 6 | 125 g/m² | 57% | 0.163 mm (6.4 mils) | Not tested | Not tested | 1.33/1.78 N (0.3/0.4 Ib) |

## Claims

1. A nonwoven printing medium comprising:
a single spunbond nonwoven web having two major surfaces, the spunbond nonwoven web comprising substantially continuous polymeric sheath-core spunbond fibers;
wherein the printing medium has a basis weight, determined in accordance with ASTM D-3776, of between 75 g/m² and about 152 g/m², a tensile strength, determined in accordance with ASTM D5035, of at least 155.8 N (35 Ib) in the machine and cross directions, a tear resistance, determined in accordance with ASTM D5734, of at least 1.3 N (0.3 Ib) in the machine and cross directions, and an opacity, determined in accordance with TAPPI T425, of between 80% and 99%, further comprising a printable coating on at least one surface of the spunbond nonwoven web comprising a binder and optionally a pigment and/or a filler, wherein the coated printing medium has a basis weight, determined in accordance with ASTM D-3776, of between 80 g/m² and 240 g/m², and a smoothness, determined in accordance with TAPPI T555, of between 4.5 micrometers and 10 micrometers.

2. The printing medium of claim 1 wherein the coating is on both major surfaces of the spunbond nonwoven web.

3. The printing medium of claim 1 wherein the weight ratio of the sheath component to the core component is between 10:90 and 90:10.

4. The printing medium of claim 1 , wherein the sheath component of the spunbond fibers comprises a copolyester, and the core component of the spunbond fibers comprises poly(ethylene terephthalate).

## Patentansprüche

1. Vliesdruckmedium umfassend:
eine einfache spinnbondierte Vliesbahn, die zwei Hauptoberflächen aufweist, wobei die spinnbondierte Vliesbahn im Wesentlichen kontinuierliche polymere spinnbondierte Mantel-Kernfasern umfasst;
wobei das Druckmedium ein Flächengewicht, ASTM D-3776 gemäß bestimmt, zwischen 75 g/m² und etwa 152 g/m² , eine Zugfestigkeit, ASTM D-5035 gemäß bestimmt, von mindestens 155,8 N (35 Pfund) in den Maschinen- und Querrichtungen, eine Reißfestigkeit, ASTM D-5734 gemäß bestimmt, von mindestens 1,3 N (0,3 Pfund) in den Maschinen- und Querrichtungen und eine Opazität, TAPPI T425 gemäß bestimmt, zwischen 80 % und 99 % aufweist, des Weiteren eine bedruckbare Beschichtung auf mindestens einer Oberfläche der spinnbondierten Vliesbahn umfassend, die ein Bindemittel und wahlweise ein Pigment und/oder einen Füllstoff umfasst, wobei das beschichtete Druckmedium ein Flächengewicht, ASTM D-3776 gemäß bestimmt, zwischen 80 g/m² und 240 g/m² und eine Glätte, TAPPI T555 gemäß bestimmt, zwischen 4,5 Mikrometern und 10 Mikrometern aufweist.

2. Druckmedium nach Anspruch 1, wobei die Beschichtung sich auf beiden Hauptoberflächen der spinnbondierten Vliesbahn befindet.

3. Druckmedium nach Anspruch 1, wobei das Gewichtsverhältnis der Mantelkomponente zur Kernkomponente zwischen 10:90 und 90:10 liegt.

4. Druckmedium nach Anspruch 1, wobei die Mantelkomponente der spinnbondierten Fasern einen Copolyester umfasst und die Kernkomponente der spinnbondierten Fasern Poly(ethylenterepththalat) umfasst.

## Revendications

1. Milieu d'impression non tissé comprenant :
un voile non tissé filé-lié unique ayant deux surfaces principales, le voile non tissé filé-lié comprenant des fibres polymères substantiellement continues, filées-liées à enveloppe-âme ;
dans lequel le milieu d'impression a un poids de base, déterminé selon le procédé ASTM D-3776, compris entre 75 g/m² et environ 152 g/m², une résistance à la traction, déterminée selon la norme ASTM D-5035, d'au moins 155,8 N (35 po) dans les sens de la machine et transversal, une résistance aux déchirures, déterminée selon la norme ASTM D-5734, d'au moins 1,3 N (0,3 po) dans les sens de la machine et transversal, et une opacité, déterminée selon la norme TAPPI T425, comprise entre 80 % et 99 %, comprenant en outre un revêtement imprimable sur au moins une surface du voile non tissé filé-lié comprenant un liant et optionnellement un pigment et/ou une charge, dans lequel le milieu d'impression revêtu a un poids de base, déterminé selon la norme ASTM D-3776, compris entre 80 g/m² et 240 g/m², et un lissé, déterminé selon la norme TAPPI T555, compris entre 4,5 micromètres et 10 micromètres.

2. Milieu d'impression selon la revendication 1, dans lequel le revêtement est situé sur les deux surfaces principales du voile non tissé filé-lié.

3. Milieu d'impression selon la revendication 1, dans lequel le rapport en poids du composant de type enveloppe sur le composant de type âme est compris entre 10:90 et 90:10.

4. Milieu d'impression selon la revendication 1, dans lequel le composant de type enveloppe des fibres filées-liées comprend un copolyester, et le composant de type âme des fibres filées-liées comprend du poly(téréphtalate d'éthylène).
